# FASCICULE DE BREVET EUROPEEN

(11) **EP 0 461 944 B1**
(45) Date de publication et mention de la délivrance du brevet: **20.04.1994**
(21) Numéro de dépôt: 91401323.0
(22) Date de dépôt: 23.05.1991
(51) Int. Cl.: B23K 26/00, B23K 26/06

(54) **Dispositif récupérateur de l'énergie d'un faisceau laser**
Einrichtung zum Rückgewinnen der Energie eines Laserstrahls
Energy recovery device for laser beam

(30) Priorité: 28.05.1990 FR 9006567
(43) Date de publication de la demande: 18.12.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: de Contencin, François Xavier, F-94260 Fresnes (FR); Marot, Gérard, F-91370 Verrieres le Buisson (FR); Trottier, Serge, F-92150 Suresnes (FR)
(74) Mandataire: Berrou, Paul

(56) Documents cités:
- EP-A- 0 174 915
- FR-A- 2 450 660
- PATENT ABSTRACTS OF JAPAN vol. 9, no. 286 (M-429)(2009) November 13, 1985& JP-A-60 127 088 (SHIN NIPPON SEITETSU )

## Description

L'invention concerne un dispositif récupérateur de l'énergie d'un faisceau laser.

L'énergie d'un faisceau laser est parfois utilisée pour chauffer des pièces afin de réaliser un traitement thermique ou en préliminaire à une opération d'usinage. Le faisceau est projeté sur un point de la surface de la pièce, mais une part de l'énergie est réfléchie par la surface et n'est donc pas absorbée. Cette part peut atteindre 80 à 90 % dans certains cas. Le gaspillage est donc considérable et il faut prendre des précautions pour éviter les destructions que le faisceau réfléchi peut occasionner.

Le taux d'absorption peut être accru si on se place dans de bonnes conditions en ce qui concerne la direction d'incidence du faisceau et la direction de polarisation de la lumière, mais les valeurs idéales de ces paramètres sont souvent difficiles à évaluer ou à obtenir et dépendent fortement des conditions concrètes de l'opération. Il est donc illusoire de compter sur des accroissements importants de rendement de cette façon.

Il a déja été proposé, notamment par le EP-A1-0.174 .915 d'utiliser un miroir, notamment elliptique qui récupère l'énergie réfléchie pour la renvoyer sur la surface à traiter. Malheureusement ce dispositif est peu souple d'utilisation et ne permet pas les réglages propres à chaque utilisation.

L'invention consiste en un système qui permet une bonne absorption de l'énergie du faisceau laser par la pièce à chauffer. Ce dispositif est constitué par un système spéculaire formé de deux miroirs sphériques concaves dont les points de focalisation sont distincts l'un de l'autre.

Un tel système permet d'obtenir des réflexions multiples du faisceau laser en direction de la surface à traiter. Avec un système bien choisi, on peut disposer la tête et les miroirs par rapport à la surface de manière que le faisceau soit réfléchi sur un premier miroir, puis sur un deuxième puis à nouveau sur le premier et éventuellement plusieurs fois de suite ainsi. Comme une partie de l'énergie du faisceau laser est absorbée par la surface à traiter à chaque arrivée sur celle-ci, les gaspillages d'énergie sont sensiblement diminués.

Les miroirs seront liés à la tête de laser. Il est avantageux que les miroirs aient des positions réglables par rapport à la tête ou entre eux. Une telle disposition permet éventuellement de modifier la position des points d'arrivée du faisceau sur la pièce et d'obtenir une concentration plus ou moins grande de l'échauffement. De tels réglages peuvent également être nécessaires pour s'adapter à des courbures et des inclinaisons différentes des surfaces à traiter : un système parfaitement réglé pour une surface plane risquerait de devenir totalement inopérant pour des surfaces cylindriques de petit diamètre.

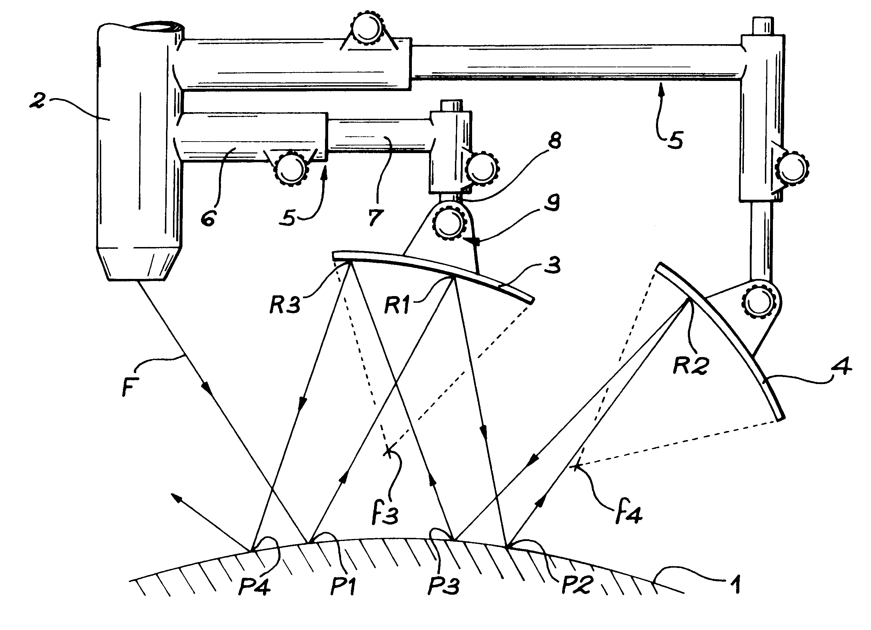

On va maintenant décrire l'invention plus en détail à l'aide de la figure unique qui représente une réalisation de l'invention.

La surface à traiter 1 appartient à une pièce tournée et est donc cylindrique. La tête de laser est référencée par 2 et envoie un faisceau F de laser vers un premier point d'arrivée P1 de la surface à traiter 1.

Le système spéculaire comprend un premier miroir 3 et un second miroir 4 réfléchissants. Les miroirs 3 et 4 sont des portions de surfaces sphériques légèrement concaves. Leurs points de focalisation f3 et f4 sont proches de la surface à traiter 1 mais distincts l'un de l'autre et du premier point d'arrivée P1, ce qui signifie que des normales issues de tous les points, à l'exception éventuellement d'un seul, des facettes 3 et 4 passent à l'écart de ce premier point d'arrivée P1.

Le faisceau F est réfléchi au premier point d'arrivée P1 et parvient au premier miroir 3, en un premier point de réflexion R1, d'où il est réfléchi à nouveau vers un deuxième point d'arrivée P2 sur la surface à traiter 1. Une nouvelle réflexion se produit alors et la lumière atteint un deuxième point de réflexion R2 situé cette fois-ci sur le second miroir 4. Le faisceau F est alors dirigé vers un troisième point d'arrivée P3 sur la surface à traiter 1, entre les deux précédents P1 et P2, puis vers un troisième point de réflexion R3 situé sur le premier miroir 3. On observe encore un quatrième point d'arrivée P4 non loin du premier P1, après quoi l'énergie qui subsiste dans cette partie du faisceau s'échappe du dispositif.

On conçoit que le réglage de la position des miroirs 3 et 4 permet d'ajuster le nombre et la répartition des points d'arrivée P. C'est pourquoi chacun des miroirs est fixé à la tête 2 par l'intermédiaire d'un support 5 déformable. Les supports 5 comprennent un tube 6 fixé à la tête de laser 2 et perpendiculaire à elle, dans laquelle coulisse une barre 7. La barre 7 comprend à son extrémité un perçage où une barrette 8 coulisse parallèlement à la tête de laser 2. L'extrémité de la barrette 8 porte une charnière 9 à laquelle le miroir 3 ou 4 est fixé. Chacun des degrés de liberté ainsi obtenu peut être bloqué par un moyen approprié qui peut comporter des vis ou les écrous de pression à papillon ou des moyens analogues.

On préférera souvent l'emploi de miroirs à grande longueur focale, ce qui permet de multiplier le nombre de points d'arrivée P.

## Revendications

1. Dispositif récupérateur de l'énergie d'un faisceau laser (F) émis par une tête de laser (2) vers une surface à traiter (1) comportant un système spéculaire, caractérisé en ce que ledit système spéculaire est formé de deux miroirs sphériques concaves (3,4) dont les points de focalisation (f3, f4) sont distincts l'un de l'autre.

2. Dispositif récupérateur d'énergie selon la revendication 1 caractérisé en ce que les deux miroirs sphériques concaves (3,4) sont reliés à la tête de laser (2) par des dispositifs de réglage de positions (5-9).

3. Dispositif récupérateur d'énergie selon la revendication 2, caractérisé en ce que la tête laser (2) et les miroirs sphériques concaves (3,4) sont disposés par rapport à la surface (1) de manière que le faisceau (F) soit réfléchi sur le premier miroir (3), puis sur le deuxième miroir (4), puis à nouveau sur le premier miroir (3).

## Claims

1. A device for recovering energy from a laser beam (F) emitted by a laser head (2) to a surface to be treated (1) comprising a specular system, characterised in that said specular system is formed of two concave spherical mirrors (3, 4), the focal points (f3, f4) of which are distinct from one another.

2. A device for recovering energy according to Claim 1, characterised in that the two concave spherical mirrors (3, 4) are connected to the laser head (2) by position-adjusting devices (5-9).

3. A device for recovering energy according to Claim 2, characterised in that the laser head (2) and the concave spherical mirrors (3, 4) are arranged relative to the surface (1) such that the beam (F) is reflected on the first mirror (3), then on the second mirror (4), then again on the first mirror (3).

## Patentansprüche

1. Vorrichtung zur Rückgewinnung der Energie eines Laserstrahls (F), der von einem Laserkopf (2) auf eine zu bearbeitende Oberfläche (1) gesendet wird, mit einem Spiegelsystem, **dadurch gekennzeichnet**, daß dieses Spiegelsystem aus zwei sphärischen Hohlspiegeln (3, 4) besteht, deren Brennpunkte (f3, f4) voneinander getrennt sind.

2. Vorrichtung zur Energierückgewinnung nach Anspruch 1, dadurch gekennzeichnet, daß die beiden sphärischen Hohlspiegel (3, 4) mit dem Laserkopf (2) über Vorrichtungen (5 bis 9) verbunden sind, die eine Einstellung ihrer Position ermöglichen.

3. Vorrichtung zur Energierückgewinnung nach Anspruch 2, dadurch gekennzeichnet, daß der Laserkopf (2) und die sphärischen Hohlspiegel (3, 4) relativ zu der zu bearbeitenden Oberfläche (1) so angeordnet sind, daß der Laserstrahl (F) auf den ersten Spiegel (3), dann auf den zweiten Spiegel (4) und dann wieder auf den ersten Spiegel (3) reflektiert wird.
